Europäisches Patentamt

European Patent Office

Office européen des brevets

(19)

(11) Veröffentlichungsnummer: **0 453 894 A2**

# (12) EUROPÄISCHE PATENTANMELDUNG

(21) Anmeldenummer: 91105813.9

(22) Anmeldetag: **12.04.91**

(51) Int. Cl.5: **B29C 33/38**, B29C 33/56,
B29C 45/37, B29C 45/58,
B29C 45/60, B29C 45/62,
B29C 47/12, B29C 47/60,
B29C 47/66

(30) Priorität: 24.04.90 DE 4012933

(43) Veröffentlichungstag der Anmeldung:
**30.10.91 Patentblatt 91/44**

(84) Benannte Vertragsstaaten:
**AT CH DE ES FR GB IT LI SE**

(71) Anmelder: **ROBERT BOSCH GmbH
Postfach 10 60 50**

W-7000 Stuttgart 10(DE)

(72) Erfinder: **Michler, Wilhelm
Salierstr. 26
W-7050 Waiblingen(DE)**
Erfinder: **Burr, August, Prof. Dr.
Willy-Schenk-Str. 43
W-7070 Schwäbisch Gmünd(DE)**

(54) **Maschinen- und Werkzeugteile für Spritzgiessen, Extrudieren, Strangpressen und Druckguss.**

(57) Bei Maschinen- und Werkzeugteilen für Spritzgießen, Extrudieren, Strangpressen und Druckguß mit Wandungen, welche mit den zu verarbeitenden Werkstoffen in Berührung kommen, sollen diese Wandungen zumindest zum Teil aus Hochleistungskeramik bestehen.

EP 0 453 894 A2

## Stand der Technik

Die Erfindung betrifft Maschinen- und Werkzeugteile für Spritzgießen, Extrudieren, Strangpressen und Druckguß mit Wandungen, welche mit den zu verarbeitenden Werkstoffen in Berührung kommen.

Insbesondere Kunststoffverarbeitungswerkzeuge, wie beispielsweise Spritzgießwerkzeuge, Presswerkzeuge, Spritzpresswerkzeuge, Extruderwerkzeuge od. dgl. unterliegen insbesondere bei der Verarbeitung von verstärktem Kunststoff und High-Tech- Kunststoffen einem hohen Verschleiß. Die Folgen davon sind hohe Reparatur- bzw. Instandsetzungskosten, Produktionsausfall, Maschinenstillstand und erhöhter Ausschuß.

Um diesen Nachteilen abzuhelfen, wurden die Wandungen aus verschleißfesteren Werkstoffen hergestellt, wie beispielsweise verschleißfesten Stählen, nitrierten Bimetallzylindern od. dgl.. Aber auch diese Werkstoffe weisen keine genügende Verschleißfestigkeit auf.

## Vorteile der Erfindung

Werden dagegen die Wandungen gemäß der vorliegenden Erfindung zumindest zum Teil aus Hochleistungskeramik hergestellt, so wird der Verschleiß um ein Vielfaches reduziert. Dies bedeutet eine erhebliche Reduzierung der Werkzeuginstandsetzungskosten, Erhöhung der Werkzeugstandzeiten sowie eine Verringerung von Maschinenstillständen und Produktionsausfall. Außerdem wird die Qualitätskonstanz der Produkte verbessert und der Ausschuß wesentlich reduziert. Die Wandung braucht nicht einstückig aufgebaut sein, sondern im Rahmen der Erfindung liegt auch ein segmentartiger Aufbau.

Keramische Werkstoffe sind Formkörper, die aus nicht metallischen, anorganischen Werkstoffen aufgebaut sind. Es handelt sich dabei um Werkstoffe aus der Klasse der Oxide, Nitride und Carbide von metallischen oder halbmetallischen Elementen. In den keramischen Werkstoffen treten zwei Bindungsarten auf, nämlich die Ionenbindung und die kovalente Bindung. Die starken und äußerst stabilen Bindungen verleihen den keramischen Werkstoffen eine hohe Härte und Drucktestigkeit, hohe Temperaturbeständigkeit, gute chemische Beständigkeit, niedrige thermische und elektrische Leitfähigkeit. Alle diese positiven Eigenschaften sind bei der Verwendung von Keramik in Wandungen von Werkzeugen, beispielsweise der Kunststoffverarbeitung ebenfalls zu beobachten, so daß, wie oben erwähnt, der Verschleiß erheblich herabgesetzt wird.

Bevorzugt soll für die Keramik Zirkondioxid Anwendung finden. Dieses Zirkondioxid ist vor allem als thermischer Isolator bekannt und besitzt dementsprechend eine erhebliche Verschleißfestigkeit gegenüber dem aufgeschmolzenen Kunststoff. Des weiteren ist Zirkondioxid relativ preisgünstig.

Zur Stabilisierung soll dem Zirkondioxid noch zusätzlich Magnesium beigemischt werden.

Bevorzugt wird eine derartige Keramik beispielsweise in der Wandung eines Spritzzylinders einer Kunststoffverarbeitungsmaschine, wie beispielsweise einer Kunststoffpresse, verwendet, wobei dann diese Keramik zu einer Keramikbuchse geformt ist. Die Anwendung ist sowohl in der Meeteringzone wie auch in der Einzugs- bzw. Kompressionszone möglich.

Ferner kann Keramik auch als Angußbuchse und/oder als Formeinsatz in einem Spritzgießwerkzeug aus Keramik Anwendung finden.

Vom erfinderischen Gedanken grundsätzlich umfaßt ist die Verwendung von Hochleistungskeramik, insbesondere von Zirkondioxid, zur Herstellung von Wandungen von Maschinen- und Werkzeugteilen, welche mit den zu verarbeitenden Werkstoffen in Berührung kommen, insbesondere von Wandungen in kunststoffführenden Hohlräumen von Werkzeugen der Kunststoffverarbeitung.

## Zeichnung

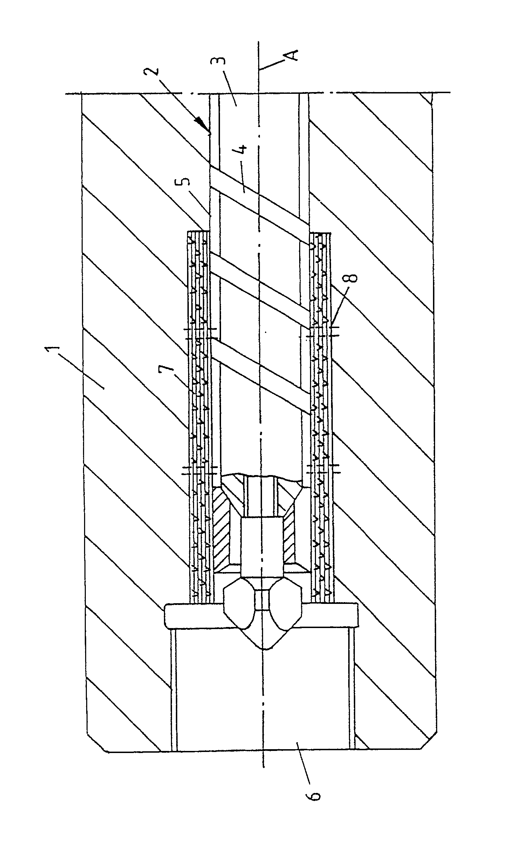

Die vorliegende Erfindung wird anhand der Zeichnung beispielhaft erläutert. Diese Zeichnung zeigt in ihrer einzigen Figur einen teilweise dargestellten Querschnitt durch einen Plastifizierzylinder einer Kunststoffschneckenpresse. Dieser Plastifizierzylinder 1 besitzt eine Längsbohrung 2, in welcher eine Schnecke 3 dreht. Die Schneckengänge 4 streifen dabei an der Wandung 5 der Bohrung 2. Durch Drehen der Schnecke 3 um ihre Längsachse A wird Kunststoff in der Bohrung 2 bewegt.

Die Bohrung 2 geht links in einen Auslaß 6 über.

Erfindungsgemäß ist zumindest ein Teil der Wandung 5 der Axialbohrung 2 mit einem Keramikeinsatz 7 ausgelegt, wobei dieser Keramikeinsatz 7 als Keramikbuchse ausgebildet und in die Wand des Zylinders 1 eingebette<sup>t</sup> ist. Die gestrichelten Linien 8 deuten an, daß der Keramikeinsatz 7 auch segmentartig aufgebaut sein kann.

## Patentansprüche

1. Maschinen- und Werkzeugteile für Spritzgießen, Extrudieren, Strangpressen und Druckguß mit Wandungen, welche mit dem zu verarbeitenden Werkstoffen in Berührung kommen, dadurch gekennzeichnet, daß die Wandungen (5) zumindest zum Teil aus Hochleistungskeramik bestehen.

2. Maschinen- und Werkzeugteile nach Anspruch 1, dadurch gekennzeichnet, daß die Wandungen (5) segmentartig aufgebaut sind.

3. Maschinen- und Werkzeugteile nach einem der Ansprüche 1 und 2, dadurch gekennzeichnet, daß die Wandung (5) eines Spritzzylinders (1) eine Kunststoffverarbeitungsmaschine zumindest teilweise aus einer Keramikbuchse (7) besteht.

4. Maschinen- und Werkzeugteile nach Anspruch 3, dadurch gekennzeichnet, daß zumindest die Einzugs- und/oder die Meeteringzone des Spritzzylinders (1) aus Keramik bestehen.

5. Werkzeug nach einem der Ansprüche 1 oder 2, dadurch gekennzeichnet, daß eine Angußbuchse und/oder ein Formeinsatz in einem Spritzgießwerkzeug aus Keramik besteht.

6. Werkzeug- und Maschinenteile nach einem der vorhergehenden Ansprüche, dadurch gekennzeichnet, daß als Keramik Oxide, Nitride oder Carbide von metallischen oder halbmetallischen Elementen verwendet werden.

7. Werkzeug- und Maschinenteile nach Anspruch 6, dadurch gekennzeichnet, daß als Keramik Zirkondioxid verwendet wird.

8. Werkzeug- und Maschinenteile nach Anspruch 7, dadurch gekennzeichnet, daß das Zirkondioxid mit Magnesium stabilisiert wird.

9. Verwendung von Hochleistungskeramik zur Herstellung von Wandungen von Maschinen- und Werkzeugteilen, welche mit den zu verarbeitenden Werkstoffen in Berührung kommen.